(19) Europäisches Patentamt / European Patent Office / Office européen des brevets

(11) **EP 2 904 364 B1**

(12) **FASCICULE DE BREVET EUROPEEN**

(45) Date de publication et mention de la délivrance du brevet:
**21.12.2016 Bulletin 2016/51**

(21) Numéro de dépôt: **13756315.1**

(22) Date de dépôt: **26.08.2013**

(51) Int Cl.:
*G01L 23/10* *(2006.01)*    *G01L 23/22* *(2006.01)*

(86) Numéro de dépôt international:
**PCT/EP2013/002563**

(87) Numéro de publication internationale:
**WO 2014/053205 (10.04.2014 Gazette 2014/15)**

(54) **CIRCUIT AMPLIFICATEUR DE MESURE AMELIORE POUR CAPTEUR PIEZO-ELECTRIQUE POSITIONNE DANS UN MOTEUR A COMBUSTION INTERNE**

VERBESSERTES MESSUNGSSCHALTKREIS FÜR IN EINEN VERBRENNUNGSMASCHINE POSITIONIERTE PIEZO-ELEKTRIK SENSOR

AMPLIFIER MEASURING CIRCUIT IMPROVED FOR A PIEZO-ELECTRIC SENSOR LOCATED WITHIN A INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.10.2012 FR 1259472**

(43) Date de publication de la demande:
**12.08.2015 Bulletin 2015/33**

(73) Titulaires:
• **Continental Automotive France 31100 Toulouse (FR)**
• **Continental Automotive GmbH 30165 Hannover (DE)**

(72) Inventeur: **MIRASSOU, David F-31200 Toulouse (FR)**

(56) Documents cités:
**US-A1- 2007 101 814    US-A1- 2009 120 164**

EP 2 904 364 B1

## Description

L'invention concerne un circuit amplificateur de mesure amélioré pour capteur piézo-électrique positionné dans un moteur à combustion interne. L'invention est plus particulièrement, mais non exclusivement, adaptée au domaine de la mesure de pression dans un moteur à combustion interne.

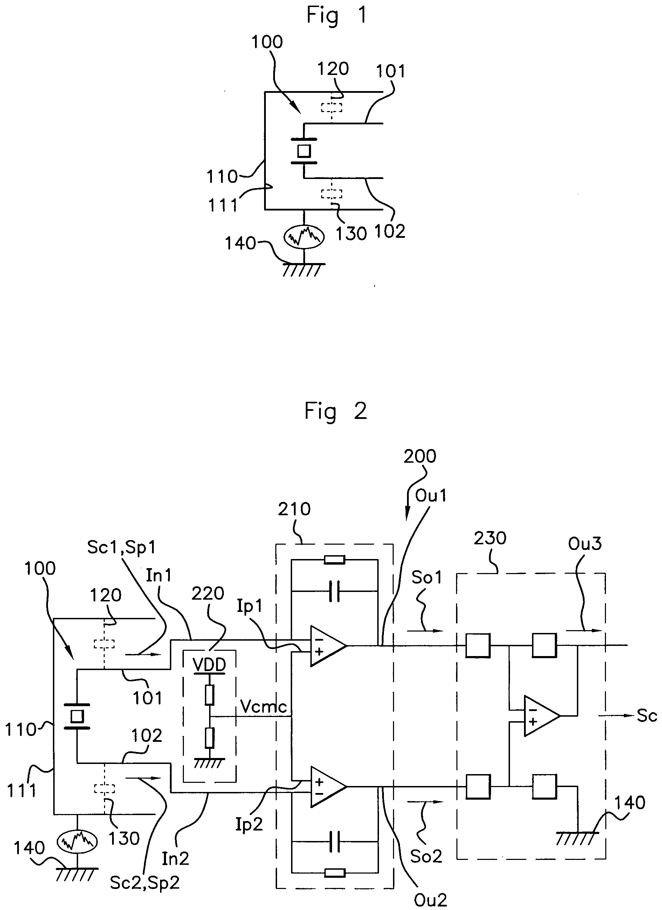

La figure 1 représente schématiquement un capteur 100 de pression piézo-électrique positionné à l'intérieur d'un cylindre 110 de moteur à combustion interne. Le cylindre 110 de moteur est relié à une masse moteur. Le capteur 100 mesure la pression dans une chambre de combustion du moteur. Ledit capteur 100 de pression piézo-électrique délivre un signal Sc à mesurer (non représenté à la figure 1). Ce signal Sc à mesurer est différentiel et correspond à une charge électrique proportionnelle à la pression régnant dans la chambre de combustion du moteur à combustion interne.

Selon l'art antérieur, le capteur 100 est associé à un circuit 200 amplificateur de mesure permettant d'amplifier le signal Sc à mesurer (cf. figure 2). Ledit circuit 200 comporte un amplificateur différentiel 210, un module 220 de génération de tension de mode commun désigné ci-après module 220 générateur, et un module 230 de soustraction.

Le document US2009/120164 A divulgue un circuit amplificateur de mesure pour un capteur piézo-électrique.

L'amplificateur différentiel 210 est un module intermédiaire réalisant une adaptation d'impédance et une conversion de charges en tensions entre le capteur 100 et le module 230 de soustraction. A cette fin, ledit amplificateur différentiel 210 comporte deux entrées In1 et In2 reliées respectivement à une première borne 101 et une deuxième borne 102 du capteur 100, deux entrées Ip1 et Ip2 reliées au module 220 générateur, ainsi que deux sorties Ou1 et Ou2 reliées au module 230 de soustraction. Le module 220 générateur est relié à une source de tension VDD et délivre un signal Vcmc de tension de mode commun continue, égale à la tension VDD divisée par deux, aux entrées Ip1 et Ip2 reliées au module 220 générateur. En théorie, le capteur 100 délivre un premier signal Sc1, sous forme de charges électriques, sur l'entrée In1 de l'amplificateur différentiel 210 reliée au capteur 100 et un deuxième signal Sc2, sous forme de charges électriques, sur l'autre entrée In2 de l'amplificateur différentiel 210 reliés au capteur 100. Le signal Sc à mesurer correspond à la différence entre le premier signal Sc1 délivré par le capteur 100 et le deuxième signal Sc2 délivré par le capteur 100. La première sortie Ou1 de l'amplificateur différentiel 210 délivre un premier signal So1 de sortie, correspondant à une tension équivalente aux charges électriques du premier signal Sc1 délivré par le capteur 100 et la deuxième sortie Ou2 de l'amplificateur différentiel 210 délivre un deuxième signal So2 de sortie, ce signal correspondant à une tension équivalente aux charges électriques du deuxième signal Sc2 délivré par le capteur 100.

Le module 230 de soustraction permet d'amplifier un signal So (non représenté) correspondant à la différence de potentiel entre le deuxième signal So2 de sortie et le premier signal So1 de sortie. En outre, le module 230 rejette la partie commune desdits signaux So1 et So2 de sortie.

Cependant, en pratique, un premier signal Sp1 parasite et un deuxième signal Sp2 parasite correspondant à des charges parasites viennent respectivement se superposer au premier signal Sc1 et au deuxième signal Sc2 délivrés par le capteur 100. Le signal Sp1 se présente sous la forme :

$$Sp1 = C1 * \frac{d(Vm - Ve)}{dt}$$

où C1 est la capacité électrique d'un premier élément 120 capacitif parasite et $\frac{d(Vm-Ve)}{dt}$ est la dérivée par rapport au temps de la différence de potentiel entre la masse du moteur à combustion interne Vm et la masse 140 électrique Ve du capteur. De même, le signal Sp2 se présente sous la forme :

$$Sp2 = C2 * \frac{d(Vm - Ve)}{dt}$$

où C2 est la capacité électrique d'un deuxième élément 130 capacitif parasite et $\frac{d(Vm-Ve)}{dt}$ est la dérivée par rapport au temps de la différence de potentiel entre la masse moteur Vm et la masse 140 électrique Ve. Lesdits éléments 120, 130 capacitifs parasites sont créés par un espacement réduit entre une paroi 111 interne du cylindre 110 du moteur et des bornes 101, 102 du capteur 100 (cf. figure 1).

Le circuit 200 permet de supprimer les signaux Sp1 et Sp2 parasites dans l'unique cas où lesdits signaux Sp1 et Sp2 parasites sont identiques. Cependant, la capacité électrique C1 du premier élément 120 capacitif parasite est rarement identique à la capacité électrique C2 du deuxième élément 130 capacitif parasite. La différence entre les deux signaux Sp1 et Sp2 parasites est alors amplifiée de la même manière que le signal Sc à mesurer, ce qui fausse la mesure réalisée.

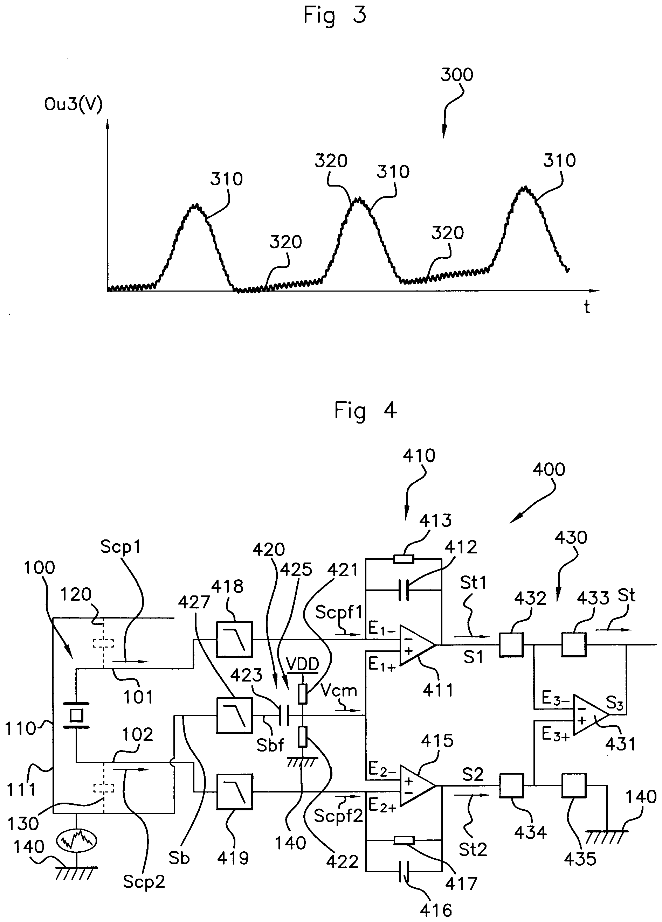

La figure 3 représente une courbe 300 correspondant à un signal Ou3 de sortie obtenu en sortie du circuit 200 par rapport au temps t. Le signal Ou3 est représentatif du signal Sc. Cette courbe 300 comporte des pics 310 de tension correspondant à des pics de pression à l'intérieur de la chambre de combustion du moteur. Ladite courbe 300 comporte en outre des variations 320 correspondant à la différence entre les deux signaux Sp1 et Sp2 parasites, ces variations faussant la mesure d'une dizaine de millivolts.

L'invention a notamment pour but de résoudre ce problème.

A cette fin, l'invention concerne un circuit amplificateur de mesure pour capteur piézo-électrique positionné dans un moteur à combustion interne délivrant un signal à mesurer, ledit circuit comportant :

- un module de génération de tension de mode commun,
- un amplificateur différentiel comportant un premier amplificateur opérationnel ayant une première entrée branchée à une première borne du capteur piézo-électrique, une deuxième entrée branchée à une sortie du module de génération de tension de mode commun et une sortie, ledit amplificateur différentiel comportant un deuxième amplificateur opérationnel ayant une première entrée branchée à une deuxième borne du capteur piézo-électrique, une deuxième entrée branchée à la sortie du module de génération de tension de mode commun et une sortie,
- un module de soustraction comportant un amplificateur opérationnel relié aux sorties des premier et deuxième amplificateurs opérationnels de l'amplificateur différentiel,

le circuit se caractérisant en ce que le module de génération de tension de mode commun est destiné à être relié à une paroi du moteur, ledit module de génération de tension de mode commun étant adapté à délivrer un signal de tension de mode commun reproduisant les variations d'un signal de moteur reçu de ladite paroi du moteur.

L'invention peut être mise en oeuvre selon les modes de réalisation avantageux exposés ci-après, lesquels peuvent être considérés individuellement ou selon toute combinaison techniquement opérante.

Avantageusement, le module de génération de tension de mode commun comporte un filtre passe haut destiné à être relié à la paroi du moteur, ledit filtre passe haut étant adapté à supprimer la composante continue du signal de moteur reçu de ladite paroi du moteur et à laisser passer au moins une partie des variations dudit signal de moteur dont les fréquences sont comprises dans une bande de fréquence utile du signal à mesurer.

Avantageusement, le filtre passe-haut du module de génération de tension de mode commun comporte une première résistance, une deuxième résistance et un élément capacitif dont une première borne est reliée aux résistances et dont une seconde borne est destinée à être reliée à la paroi du moteur.

Avantageusement,

- une première borne de la première résistance est reliée à une source de tension,
- une deuxième borne de la première résistance est reliée à une première borne de la deuxième résistance, à une première borne de l'élément capacitif et à la sortie du module de génération de tension de mode commun,
- une deuxième borne de la deuxième résistance est reliée à la masse électrique.

Avantageusement, le filtre passe haut comporte une fréquence de coupure inférieure à la fréquence minimale de la bande de fréquence utile du signal à mesurer.

Avantageusement, un filtre CEM (compatibilité électromagnétique) est branché en série du module de génération de tension de mode commun.

Avantageusement,

- la sortie du premier amplificateur opérationnel de l'amplificateur différentiel est reliée à la première entrée dudit premier amplificateur opérationnel par une boucle de contre-réaction comportant un élément capacitif branché en parallèle avec une résistance,
- la sortie du deuxième amplificateur opérationnel de l'amplificateur différentiel est reliée à la première entrée dudit deuxième amplificateur opérationnel par une boucle de contre-réaction comportant un élément capacitif branché en parallèle avec une résistance.

L'invention concerne également un procédé d'amplification de mesure pour capteur piézo-électrique positionné dans un moteur, destiné à être mis en oeuvre par le circuit selon l'invention, le procédé se caractérisant en ce qu'il comporte les étapes consistant à :

a) délivrer un premier signal bruité à la première entrée du premier amplificateur opérationnel de l'amplificateur différentiel et un deuxième signal bruité à la première entrée du deuxième amplificateur opérationnel de l'amplificateur différentiel,

- chaque signal bruité étant la superposition d'un signal de capteur et d'un signal parasite,
- la différence entre les signaux de capteur correspondant au signal à mesurer,

b) filtrer un signal de moteur afin de créer le signal de tension de mode commun suivant les variations du signal de moteur,

c) appliquer le signal de tension de mode commun aux deuxièmes entrées de chaque amplificateur opérationnel de l'amplificateur différentiel, de manière à maintenir une tension fixe aux bornes des éléments capacitifs parasites, de sorte que les éléments capacitifs parasites n'émettent pas de charges parasites.

Le procédé objet de l'invention peut être mis en oeuvre selon les mises en oeuvre avantageuses exposées ci-après, lesquelles peuvent être considérées individuellement ou selon toute combinaison techniquement opérante.

Avantageusement, le procédé comporte après l'étape c) les étapes consistant à :

d) soustraire un premier signal de sortie obtenu en sortie du premier amplificateur de l'amplificateur différentiel à un deuxième signal de sortie obtenu en sortie du deuxième amplificateur de l'amplificateur différentiel afin d'obtenir un signal à amplifier correspondant au signal à mesurer sans signal parasite,
e) amplifier le signal à amplifier.

Avantageusement, le procédé comporte avant l'étape b) les étapes consistant à :

f) filtrer les premier et deuxième signaux bruités pour des fréquences supérieures à un seuil de fréquence,
g) filtrer un signal de moteur pour des fréquences supérieures au seuil de fréquence.

L'invention sera mieux comprise à la lecture de la description suivante, donnée à titre d'exemple nullement limitatif, et faite en se référant aux figures qui représentent :

- Figure 1 : une représentation schématique d'un capteur de pression piézo-électrique positionné à l'intérieur d'un cylindre de moteur ;
- Figure 2 : une représentation schématique du capteur de la figure 1 associé à un circuit amplificateur de mesure selon l'état de l'art ;
- Figure 3 : une représentation graphique d'un signal de sortie du circuit amplificateur de mesure de la figure 2 ;
- Figure 4 : une représentation schématique du capteur de la figure 1 associé à un circuit amplificateur de mesure amélioré selon un exemple de réalisation de l'invention ;
- Figure 5 : une représentation graphique d'un signal de sortie du circuit amplificateur de mesure amélioré de la figure 4 ;
- Figure 6 : un diagramme fonctionnel montrant différentes étapes du procédé selon un exemple de réalisation de l'invention.

Dans ces figures, des références identiques d'une figure à une autre désignent des éléments identiques ou analogues. Pour des raisons de clarté, les éléments représentés ne sont pas à l'échelle, sauf mention contraire.

Le capteur 100 de pression piézo-électrique de la figure 1 est associé à un circuit 400 amplificateur de mesure amélioré (cf. figure 4). Ledit circuit 400 comporte un amplificateur différentiel 410, un module 420 de génération de tension de mode commun, désigné ci-après module 420 générateur, et un module 430 de soustraction.

L'amplificateur différentiel 410 est un module intermédiaire réalisant une adaptation d'impédance et une conversion de charges en tensions entre le capteur 100 et le module 430 de soustraction. Le module 420 générateur délivre une tension Vcm de mode commun aux entrées de l'amplificateur différentiel 410.

Le module 430 de soustraction permet d'amplifier la différence entre deux signaux provenant de l'amplificateur différentiel 410 et de rejeter la partie commune desdits signaux.

Plus précisément, l'amplificateur différentiel comporte un premier amplificateur 411 opérationnel ayant une entrée E1+ non-inverseuse, une entrée E1- inverseuse et une sortie S1. L'entrée E1- inverseuse est reliée à la première borne 101 du capteur 100. La sortie S1 est reliée à l'entrée E1- inverseuse par une boucle de contre-réaction comportant un élément 412 capacitif branché en parallèle avec une résistance 413. La sortie S1 est en outre reliée à une première entrée du module 430 de soustraction. L'entrée E1+ non-inverseuse est reliée à la sortie du module 420 générateur. L'amplificateur différentiel 410 comporte en outre un deuxième amplificateur 415 opérationnel ayant une entrée E2+ non-inverseuse, une entrée E2-inverseuse et une sortie S2. L'entrée E2- inverseuse est reliée à la deuxième borne 102 du capteur 100. La sortie S2 est reliée à l'entrée E2-inverseuse par une boucle de contre-réaction comportant un élément 416 capacitif branché en parallèle avec une résistance 417. L'entrée E2+ non-inverseuse est reliée à la sortie du module 420 générateur. Les amplificateurs 411 et 415 sont alimentés par une source de tension VDD. En variante, un premier filtre 418 CEM (pour Compatibilité Electromagnétique) est relié entre l'entrée E1-inverseuse du premier amplificateur 411 et la première borne 101 du capteur 100 et un deuxième filtre 419 CEM est relié entre l'entrée E2- inverseuse du deuxième amplificateur 415 et la deuxième borne 102 du capteur 100.

Ledit module 420 générateur comporte deux résistances 421 et 422 et un élément 423 capacitif. Une première borne de la première résistance 421 est reliée à une source de tension VDD tandis que la deuxième borne de ladite première résistance 421 est reliée à une première borne de la deuxième résistance 422, à une première borne de l'élément 423 capacitif et à la sortie du module 420. La deuxième borne de la deuxième résistance 422 est reliée à la masse 140 électrique. La deuxième borne de l'élément 423 capacitif est reliée au cylindre 110 du moteur par l'intermédiaire d'une paroi 111 du cylindre 110. Les résistances 421 et 422 ainsi que l'élément 423 capacitif forment un filtre 425 passe haut. Ledit filtre 425 passe haut comporte une fréquence Fc de coupure inférieure à la plus basse fréquence de la bande de fréquence utile du signal Sc à mesurer. Dans un exemple, la fréquence Fc de coupure est inférieure à quatre Hertz. Dans un exemple, la fréquence Fc de coupure est définie par la formule :

$$Fc = \frac{\pi * Rp * Cp}{4}$$

où Rp est la résistance en Ohm de chaque résistance 421, 422 et Cp est la capacité en Farad de l'élément 423 capacitif. En variante, le module 420 générateur ne comporte pas de filtre 425 passe haut et le circuit 400 amplificateur de mesure amélioré est relié à une alimentation symétrique.

En variante, un troisième filtre 427 CEM est relié entre l'élément 423 capacitif et le cylindre 110 du moteur, plus précisément la paroi 111 du cylindre 110.

Le module 430 de soustraction comporte un amplificateur 431 opérationnel ayant une entrée E3+ non-inverseuse, une entrée E3- inverseuse et une sortie S3. Le module 430 de soustraction comporte en outre quatre résistances 432, 433, 434 et 435. Une première borne de la première résistance 432 est reliée à la sortie S1 du premier amplificateur 411 de l'amplificateur différentiel 410. La deuxième borne de la première résistance 432 est reliée à l'entrée E3- inverseuse de l'amplificateur 431 du module 430 de soustraction et à une première borne de la deuxième résistance 433. La deuxième borne de la deuxième résistance 433 est reliée à la sortie S3 de l'amplificateur 431 du module 430 de soustraction. Une première borne de la troisième résistance 434 est reliée à la sortie S2 du deuxième amplificateur 415 de l'amplificateur différentiel 410. La deuxième borne de la troisième résistance 434 est reliée à l'entrée E3+ non-inverseuse de l'amplificateur 431 du module 430 de soustraction et à une première borne de la quatrième résistance 435. La deuxième borne de la quatrième résistance 435 est reliée à la masse 140 électrique.

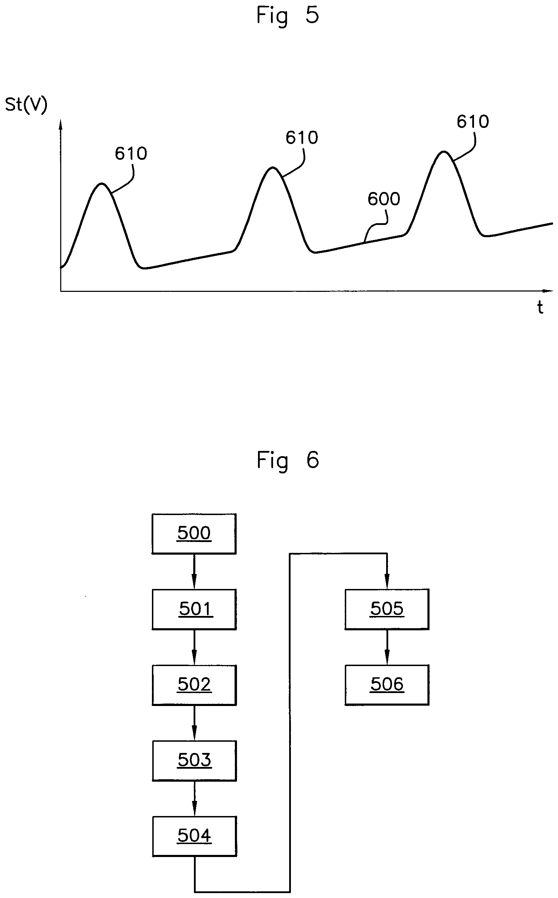

Dans une mise en oeuvre, le capteur 100 délivre, dans une étape 500 (cf. figure 6), un premier signal Scp1 bruité à l'entrée E1- inverseuse du premier amplificateur 411 opérationnel de l'amplificateur différentiel 410 et un deuxième signal Scp2 bruité à l'entrée E2- inverseuse du deuxième amplificateur 411 opérationnel de l'amplificateur différentiel 410.

Ledit premier signal Scp1 bruité est la superposition du premier signal Sc1 de capteur et d'un premier signal Sp1 parasite correspondant à des charges parasites. Le premier signal Sp1 parasite se présente sous la forme :

$$Sp1 = C1 * \frac{d(Vm - Ve)}{dt}$$

où C1 est la capacité électrique du premier élément 120 capacitif parasite et $\frac{d(Vm-Ve)}{dt}$ est la dérivée par rapport au temps de la différence de potentiel entre la masse moteur Vm et la masse 140 électrique Ve. Le premier élément 120 capacitif parasite est créé par un espacement réduit entre une paroi 111 interne du cylindre 110 du moteur et la première borne 101 du capteur 100.

De même, ledit deuxième signal Scp2 bruité est la superposition du deuxième signal Sc2 de capteur et d'un deuxième signal Sp2 parasite correspondant à des charges parasites. Le deuxième signal Sp2 parasite se présente sous la forme :

$$Sp2 = C2 * \frac{d(Vm - Ve)}{dt}$$

où C2 est la capacité électrique d'un deuxième élément 130 capacitif parasite et $\frac{d(Vm-Ve)}{dt}$ est la dérivée par rapport au temps de la différence de potentiel entre la masse moteur Vm et la masse 140 électrique Ve. Le deuxième élément 130 capacitif parasite est créé par un espacement réduit entre une paroi 111 interne du cylindre 110 du moteur et la deuxième borne 102 du capteur 100. Comme déjà expliqué précédemment, les signaux Sp1 et Sp2 parasites sont rarement identiques car la capacité électrique C1 du premier élément 120 capacitif parasite est rarement identique à la capacité électrique C2 du deuxième élément 130 capacitif parasite.

Dans une étape 501, le premier signal Scp1 bruité est filtré par le premier filtre 418 CEM et le deuxième signal Scp2 bruité est filtré par le deuxième filtre 419 CEM, pour des fréquences supérieures à un seuil Sf1 de fréquence, afin de supprimer les perturbations électromagnétiques.

Dans une étape 502, un signal Sb de moteur, induit par la différence de potentiel entre la masse 140 électrique et la masse moteur, est filtré par le troisième filtre 427 CEM, pour des fréquences supérieures au seuil Sf1 de fréquence, afin de supprimer les perturbations électromagnétiques. On retrouve le signal Sb de moteur au niveau d'une première borne de chaque élément 120, 130 capacitif parasite.

La bande de fréquence de l'information utile des signaux Scp1 et Scp2 bruités, et donc des signaux Sc1, Sc2 de capteur, des signaux Sp1, Sp2 parasites et du signal Sb de moteur, s'étend entre quatre hertz et quarante kilohertz. Cette bande de fréquence correspond à la bande de fréquence possible des pics de compression dans le cylindre 110 suivant le régime moteur. Le seuil Sf1 de fréquence est supérieur à la fréquence maximale de la bande de fréquence de l'information utile des signaux Scp1 et Scp2 bruités. Dans un exemple, le seuil Sf1 de fréquence est sensiblement égal à dix mégahertz. Les filtres 418, 419, 427 CEM ne perturbent pas les signaux Scp1, Scp2 bruités et le signal Sb de moteur dans la bande utile desdits signaux Scp1, Scp2 bruités et du signal Sb de moteur, ils sont donc assimilés à des connections directes.

Dans une étape 503, le filtre 425 passe-haut filtre un signal Sbf correspondant au signal Sb filtré par le filtre 427 CEM, pour des fréquences supérieures à la fréquence Fc de coupure du filtre 425 passe-haut. Le filtre 425 passe-haut permet ainsi de supprimer la composante continue dudit signal Sbf tout en laissant passer les variations de potentiel dudit signal Sbf. A la sortie du filtre 425 passe-haut, le signal Vcm de tension de mode commun est obtenu. Ce signal Vcm de tension de mode commun suit les variations de potentiel du signal Sb de moteur et est centré autour d'une valeur de tension continue pour la bande de fréquence de l'information utile des signaux. Dans un exemple, cette valeur de tension continue est égale à la valeur de tension VDD divisée par deux. Dans un exemple, cette valeur de tension continue est de 1,5 Volt.

Dans une étape 504, le signal Vcm de tension de mode commun est appliqué aux entrées E1+ et E2+ non inverseuses des amplificateurs 411 et 415 de l'amplificateur différentiel 410. Le signal Vcm de tension de mode commun est alors obtenu sur les entrées E1- et E2- inverseuses des amplificateurs 411 et 415 de l'amplificateur différentiel 410 et par conséquent à une deuxième borne de chaque élément 120, 130 capacitif parasite. Au niveau de la première borne de chaque élément 120, 130 capacitif parasite, on retrouve le signal Sb de moteur. Les tensions Vc1, Vc2 aux bornes des éléments 120, 130 capacitifs parasites correspondent donc au signal Vcm de tension de mode commun auquel est soustrait le signal Sb de moteur. Comme le signal Vcm de tension de mode commun suit les variations du signal Sb de moteur, les tensions Vc1, Vc2 aux bornes des éléments 120, 130 capacitifs parasites sont fixes. Les éléments 120, 130 capacitifs parasites n'émettent donc plus de charges C1, C2 parasites. Par conséquent, les signaux Sp1 et Sp2 parasites sont égaux.

La sortie S1 du premier amplificateur 411 de l'amplificateur différentiel 410 délivre un premier signal St1 de sortie et la sortie S2 du deuxième amplificateur 415 de l'amplificateur différentiel 410 délivre un deuxième signal St2 de sortie.

Dans une étape 505, le module 430 de soustraction soustrait le premier signal St1 de sortie au deuxième signal St2 de sortie afin d'obtenir un signal St à amplifier. Ledit signal St à amplifier correspond ainsi à la différence de potentiel entre le deuxième signal St2 de sortie et le premier signal St1 de sortie. En outre, le module 430 de soustraction rejette la partie commune desdits signaux St1 et St2 de sortie. Comme les signaux Sp1 et Sp2 parasites sont égaux, ils seront ainsi rejetés. Le signal St à amplifier correspond sensiblement au signal Sc à mesurer sans signal parasite.

Dans une étape 506, le module 430 de soustraction amplifie le signal St à amplifier.

En variante, les étapes 501 et 502 sont supprimées et le filtre 425 passe haut filtre directement le signal Sb de moteur dans l'étape 503.

La figure 5 représente une courbe 600 correspondant à un signal St de sortie obtenu en sortie du circuit 400, selon le temps t. Cette courbe comporte des pics 610 de tension correspondant à des pics de pression à l'intérieur de la chambre de combustion du moteur. Les variations 320 correspondant aux charges parasites injectées de la courbe 300 n'apparaissent plus sur la courbe 600. La mesure du capteur 100 n'est donc plus faussée avec le dispositif et le procédé de l'invention.

## Revendications

1. Circuit (400) amplificateur de mesure pour capteur (100) piézo-électrique positionné dans un moteur à combustion interne délivrant un signal (Sc) à mesurer, ledit circuit comportant :

   • un module (420) de génération de tension de mode commun,
   • un amplificateur différentiel (410) comportant un premier amplificateur (411) opérationnel ayant une première entrée (E1-) branchée à une première borne (101) du capteur (100) piézo-électrique, une deuxième entrée (E1+) branchée à une sortie du module (420) de génération de tension de mode commun et une sortie (S1), ledit amplificateur différentiel (410) comportant un deuxième amplificateur (415) opérationnel ayant une première entrée (E2-) branchée à une deuxième borne (102) du capteur (100) piézo-électrique, une deuxième entrée (E2+) branchée à la sortie du module (420) de génération de tension de mode commun et une sortie (S2),
   • un module (430) de soustraction comportant un amplificateur (431) opérationnel relié aux sorties (S1, S2) des premier et deuxième amplificateurs (411, 415) opérationnels de l'amplificateur différentiel (410),

   **caractérisé en ce que** le module (420) de génération de tension de mode commun est destiné à être relié à une paroi (111) du moteur, ledit module (420) de génération de tension de mode commun étant adapté à délivrer un signal (Vcm) de tension de mode commun reproduisant les variations d'un signal (Sb) de moteur reçu de ladite paroi (111) du moteur.

2. Circuit selon la revendication 1, **caractérisé en ce que** le module (420) de génération de tension de mode commun comporte un filtre (425) passe haut destiné à être relié à la paroi (111) du moteur, ledit filtre (425) passe haut étant adapté à supprimer la composante continue du signal (Sb) de moteur reçu de ladite paroi (111) du moteur et à laisser passer au moins une partie des variations dudit signal (Sb) de moteur dont les fréquences sont comprises dans une bande de fréquence utile du signal (Sc) à mesurer.

3. Circuit selon la revendication 2, **caractérisé en ce**

**que** le filtre (425) passe-haut du module (420) de génération de tension de mode commun comporte une première résistance (421), une deuxième résistance (422) et un élément (423) capacitif dont une première borne est reliée aux résistances (421, 422) et dont une seconde borne est destinée à être reliée à la paroi (111) du moteur.

4. Circuit selon la revendication 3, **caractérisé en ce que** :

   • une première borne de la première résistance (421) est reliée à une source de tension (VDD),
   • une deuxième borne de la première résistance (421) est reliée à une première borne de la deuxième résistance (422), à une première borne de l'élément (423) capacitif et à la sortie du module (420) de génération de tension de mode commun,
   • une deuxième borne de la deuxième résistance (422) est reliée à la masse (140) électrique.

5. Circuit selon l'une des revendications 2 à 4, **caractérisé en ce que** le filtre (425) passe haut comporte une fréquence (Fc) de coupure inférieure à la fréquence minimale de la bande de fréquence utile du signal (Sc) à mesurer.

6. Circuit selon l'une des revendications 1 à 5, **caractérisé en ce qu'**un filtre (427) CEM est branché en série du module (420) de génération de tension de mode commun.

7. Circuit selon l'une des revendications 1 à 6, **caractérisé en ce que** :

   • la sortie (S1) du premier amplificateur (411) opérationnel de l'amplificateur différentiel (410) est reliée à la première entrée (E1-) dudit premier amplificateur (411) opérationnel par une boucle de contre-réaction comportant un élément (412) capacitif branché en parallèle avec une résistance (413),
   • la sortie (S2) du deuxième amplificateur (415) opérationnel de l'amplificateur différentiel (410) est reliée à la première entrée (E2-) dudit deuxième amplificateur (415) opérationnel par une boucle de contre-réaction comportant un élément (416) capacitif branché en parallèle avec une résistance (417).

8. Procédé d'amplification de mesure pour capteur (100) piézo-électrique positionné dans un moteur à combustion interne, destiné à être mis en oeuvre par le circuit selon l'une des revendications 1 à 7, **caractérisé en ce qu'**il comporte les étapes consistant à :

   a) délivrer (500) un premier signal (Scp1) bruité à la première entrée (E1-) du premier amplificateur (411) opérationnel de l'amplificateur différentiel (410) et un deuxième signal (Scp2) bruité à la première entrée (E2-) du deuxième amplificateur (411) opérationnel de l'amplificateur différentiel (410),

      • chaque signal (Scp1, Scp2) bruité étant la superposition d'un signal (Sc1, Sc2) du capteur et d'un signal (Sp1, Sp2) parasite,
      • la différence entre les signaux (Sc1, Sc2) de capteur correspondant au signal (Sc) à mesurer,

   b) filtrer (503) un signal (Sb, Sbf) de moteur afin de créer le signal (Vcm) de tension de mode commun suivant les variations du signal (Sb, Sbf) de moteur,
   c) appliquer (504) le signal (Vcm) de tension de mode commun aux deuxièmes entrées (E1+, E2+) de chaque amplificateur (411, 415) opérationnel de l'amplificateur différentiel (410), de manière à maintenir une tension (Vc1, Vc2) fixe aux bornes des éléments (120, 130) capacitifs parasites, de sorte que les éléments (120, 130) capacitifs parasites n'émettent pas de charges (C1, C2) parasites.

9. Procédé selon la revendication 8, **caractérisé en ce qu'**il comporte après l'étape c) les étapes consistant à :

   d) soustraire (505) un premier signal (St1) de sortie obtenu en sortie du premier amplificateur (411) de l'amplificateur différentiel (410) à un deuxième signal (St2) de sortie obtenu en sortie du deuxième amplificateur (415) de l'amplificateur différentiel (410) afin d'obtenir un signal (St) à amplifier correspondant au signal (Sc) à mesurer sans signal parasite,
   e) amplifier (506) le signal (St) à amplifier.

10. Procédé selon la revendication 8 ou 9, **caractérisé en ce qu'**il comporte avant l'étape b) les étapes consistant à :

   f) filtrer (501) les premier et deuxième signaux (Scp1, Scp2) bruités pour des fréquences supérieures à un seuil (Sf1) de fréquence,
   g) filtrer (502) le signal (Sb) de moteur pour des fréquences supérieures au seuil (Sf1) de fréquence.

**Patentansprüche**

1. Messverstärkerschaltung (400) für einen in einem Verbrennungsmotor positionierten piezoelektrischen Sensor (100), der ein zu messendes Signal (Sc) liefert, wobei die Schaltung aufweist:

• ein Modul (420) zur Erzeugung einer Gleichtaktspannung,

• einen Differentialverstärker (410), der einen ersten Operationsverstärker (411) mit einem ersten Eingang (E1-) mit einer ersten Klemme (101) des piezoelektrischen Sensors (100) verbunden, einem zweiten Eingang (E1+) mit einem Ausgang des Moduls (420) zur Erzeugung einer Gleichtaktspannung verbunden und einem Ausgang (S1) aufweist, wobei der Differentialverstärker (410) einen zweiten Operationsverstärker (415) mit einem ersten Eingang (E2-) mit einer zweiten Klemme (102) des piezoelektrischen Sensors (100) verbunden, einem zweiten Eingang (E2+) mit dem Ausgang des Moduls (420) zur Erzeugung einer Gleichtaktspannung verbunden und einem Ausgang (S2) aufweist,

• ein Subtraktionsmodul (430), das einen Operationsverstärker (431) mit den Ausgängen (S1, S2) der ersten und zweiten Operationsverstärker (411, 415) des Differentialverstärkers (410) verbunden aufweist,

**dadurch gekennzeichnet, dass** das Modul (420) zur Erzeugung einer Gleichtaktspannung dazu bestimmt ist, mit einer Wand (111) des Motors verbunden zu werden, wobei das Modul (420) zur Erzeugung einer Gleichtaktspannung geeignet ist, ein Gleichtaktspannungssignal (Vcm) zu liefern, das die Schwankungen eines von der Wand (111) des Motors empfangenen Motorsignals (Sb) reproduziert.

2. Schaltung nach Anspruch 1, **dadurch gekennzeichnet, dass** das Modul (420) zur Erzeugung einer Gleichtaktspannung ein Hochpassfilter (425) aufweist, das dazu bestimmt ist, mit der Wand (111) des Motors verbunden zu werden, wobei das Hochpassfilter (425) geeignet ist, die Gleichkomponente des Motorsignals (Sb) zu unterdrücken, das von der Wand (111) des Motors empfangen wird, und mindestens einen Teil der Schwankungen des Motorsignals (Sb) durchzulassen, dessen Frequenzen in einem Nutzfrequenzband des zu messenden Signals (Sc) enthalten sind.

3. Schaltung nach Anspruch 2, **dadurch gekennzeichnet, dass** das Hochpassfilter (425) des Moduls (420) zur Erzeugung einer Gleichtaktspannung einen ersten Widerstand (421), einen zweiten Widerstand (422) und ein kapazitives Element (423) aufweist, von dem eine erste Klemme mit den Widerständen (421, 422) verbunden und eine zweite Klemme dazu bestimmt ist, mit der Wand (111) des Motors verbunden zu werden.

4. Schaltung nach Anspruch 3, **dadurch gekennzeichnet, dass**:

• eine erste Klemme des ersten Widerstands (421) mit einer Spannungsquelle (VDD) verbunden ist,

• eine zweite Klemme des ersten Widerstands (421) mit einer ersten Klemme des zweiten Widerstands (422), mit einer ersten Klemme des kapazitiven Elements (423) und mit dem Ausgang des Moduls (420) zur Erzeugung einer Gleichtaktspannung verbunden ist,

• eine zweite Klemme des zweiten Widerstands (422) mit der elektrischen Masse (140) verbunden ist.

5. Schaltung nach einem der Ansprüche 2 bis 4, **dadurch gekennzeichnet, dass** das Hochpassfilter (425) eine Grenzfrequenz (Fc) niedriger als die Mindestfrequenz des Nutzfrequenzbands des zu messenden Signals (Sc) aufweist.

6. Schaltung nach einem der Ansprüche 1 bis 5, **dadurch gekennzeichnet, dass** ein CEM-Filter (427) mit dem Modul (420) zur Erzeugung einer Gleichtaktspannung in Reihe geschaltet ist.

7. Schaltung nach einem der Ansprüche 1 bis 6, **dadurch gekennzeichnet, dass**:

• der Ausgang (S1) des ersten Operationsverstärkers (411) des Differentialverstärkers (410) mit dem ersten Eingang (E1-) des Operationsverstärkers (411) über eine Rückkopplungsschleife verbunden ist, die ein kapazitives Element (412) aufweist, das mit einem Widerstand (413) parallelgeschaltet ist,

• der Ausgang (S2) des zweiten Operationsverstärkers (415) des Differentialverstärkers (410) mit dem ersten Eingang (E2-) des zweiten Operationsverstärkers (415) über eine Rückkopplungsschleife verbunden ist, die ein kapazitives Element (416) aufweist, das mit einem Widerstand (417) parallelgeschaltet ist.

8. Messverstärkungsverfahren für einen piezoelektrischen Sensor (100), der in einem Verbrennungsmotor positioniert ist, dazu bestimmt, von der Schaltung nach einem der Ansprüche 1 bis 7 durchgeführt zu werden, **dadurch gekennzeichnet, dass** es die Schritte aufweist, die darin bestehen:

a) ein erstes verrauschtes Signal (Scp1) am ersten Eingang (E1-) des ersten Operationsverstärkers (411) des Differentialverstärkers (410) und ein zweites verrauschtes Signal (Scp2) am ersten Eingang (E2-) des zweiten Operationsverstärkers (411) des Differentialverstärkers (410) zu liefern (500),

> • wobei jedes verrauschte Signal (Scp1, Scp2) die Überlagerung eines Signals (Sc1, Sc2) des Sensors und eines Störsignals (Sp1, Sp2) ist,
> • wobei die Differenz zwischen den Sensorsignalen (Sc1, Sc2) dem zu messenden Signal (Sc) entspricht,

> b) ein Motorsignal (Sb, Sbf) zu filtern (503), um das Gleichtaktspannungssignal (Vcm) gemäß den Schwankungen des Motorsignals (Sb, Sbf) zu erzeugen,
> c) das Gleichtaktspannungssignal (Vcm) an die zweiten Eingänge (E1+, E2+) jedes Operationsverstärkers (411, 415) des Differentialverstärkers (410) anzulegen (504), um eine feste Spannung (Vc1, Vc2) an den Klemmen der kapazitiven Störelemente (120, 130) aufrechtzuerhalten, damit die kapazitiven Störelemente (120, 130) keine Störlasten (C1, C2) emittieren.

**9.** Verfahren nach Anspruch 8, **dadurch gekennzeichnet, dass** es nach dem Schritt c) die Schritte aufweist, die darin bestehen:

> d) ein erstes Ausgangssignal (St1), das am Ausgang des ersten Verstärkers (411) des Differentialverstärkers (410) erhalten wird, von einem zweiten Ausgangssignal (St2) zu subtrahieren (505), das am Ausgang des zweiten Verstärkers (415) des Differentialverstärkers (410) erhalten wird, um ein zu verstärkendes Signal (St) zu erhalten, das dem zu messenden Signal (Sc) ohne Störsignal entspricht,
> e) das zu verstärkende Signal (St) zu verstärken (506).

**10.** Verfahren nach Anspruch 8 oder 9, **dadurch gekennzeichnet, dass** es vor dem Schritt b) die Schritte aufweist, die darin bestehen:

> f) die ersten und zweiten verrauschten Signale (Scp1, Scp2) für Frequenzen höher als eine Frequenzschwelle (Sf1) zu filtern (501),
> g) das Motorsignal (Sb) für Frequenzen höher als die Frequenzschwelle (Sf1) zu filtern (502).

## Claims

**1.** Measurement amplifying circuit (400) for a piezoelectric sensor (100) positioned in an internal combustion engine and delivering a signal (Sc) to be measured, said circuit including:

> • a common-mode voltage generation module (420),

> • a differential amplifier (410) comprising a first operational amplifier (411) having a first input (E1-) connected to a first terminal (101) of the piezoelectric sensor (100), a second input (E1+) connected to an output of the common-mode voltage generation module (420), and an output (S1, said differential amplifier (410) comprising a second operational amplifier (415) having a first input (E2-) connected to a second terminal (102) of the piezoelectric sensor (100), a second input (E2+) connected to the output of the common-mode voltage generation module (420), and an output (S2),
> • a subtraction module (430) comprising an operational amplifier (431) connected to the outputs (S1, S2) of the first and second operational amplifiers (411, 415) of the differential amplifier (410),

**characterized in that** the common-mode voltage generation module (420) is to be connected to a wall (111) of the engine, said common-mode voltage generation module (420) being adapted to deliver a common-mode voltage signal (Vcm) reproducing the variations of an engine signal (Sb) received from said engine wall (111).

**2.** Circuit according to Claim 1, **characterized in that** the common-mode voltage generation module (420) comprises a high-pass filter (425) to be connected to the engine wall (111), said high-pass filter (425) being adapted to suppress the continuous component of the engine signal (Sb) received from said engine wall (111) and to allow the passage of at least some of the variations of said engine signal (Sb) whose frequencies are included in a useful frequency band of the signal (Sc) to be measured.

**3.** Circuit according to Claim 2, **characterized in that** the high-pass filter (425) of the common-mode voltage generation module (420) comprises a first resistance (421), a second resistance (422) and a capacitive element (423), whose first terminal is connected to the resistances (421, 422) and whose second terminal is to be connected to the engine wall (111).

**4.** Circuit according to Claim 3, **characterized in that**:

> • a first terminal of the first resistance (421) is connected to a voltage source (VDD),
> • a second terminal of the first resistance (421) is connected to a first terminal of the second resistance (422), to a first terminal of the capacitive element (423), and to the output of the common-mode voltage generation module (420), and

• a second terminal of the second resistance (422) is connected to the electrical ground (140).

5. Circuit according to any of Claims 2 to 4, **characterized in that** the high-pass filter (425) has a cut-off frequency (Fc) lower than the minimum frequency of the useful frequency band of the signal (Sc) to be measured.

6. Circuit according to any of Claims 1 to 5, **characterized in that** an EMC filter (427) is connected in series with the common-mode voltage generation module (420).

7. Circuit according to any of Claims 1 to 6, **characterized in that**:

   • the output (S1) of the first operational amplifier (411) of the differential amplifier (410) is connected to the first input (E1-) of said first operational amplifier (411) via a negative feedback loop comprising a capacitive element (412) connected in parallel with a resistance (413), and
   • the output (S2) of the second operational amplifier (415) of the differential amplifier (410) is connected to the first input (E2-) of said second operational amplifier (415) via a negative feedback loop comprising a capacitive element (416) connected in parallel with a resistance (417).

8. Measurement amplifying method for a piezoelectric sensor (100) positioned in an internal combustion engine, to be executed by the circuit according to any of Claims 1 to 7, **characterized in that** it comprises the steps of:

   a) delivering (500) a first noisy signal (Scp1) to the first input (E1-) of the first operational amplifier (411) of the differential amplifier (410) and a second noisy signal (Scp2) to the first input (E2-) of the second operational amplifier (411) of the differential amplifier (410),

      • each noisy signal (Scp1, Scp2) being formed by a sensor signal (Sc1, Sc2) and a superimposed parasitic signal (Sp1, Sp2),
      • the difference between the sensor signals (Sc1, Sc2) being equivalent to the signal (Sc) to be measured,

   b) filtering (503) an engine signal (Sb, Sbf) to create the common-mode voltage signal (Vcm) according to the variations of the engine signal (Sb, Sbf), and
   c) applying (504) the common-mode voltage signal (Vcm) to the second inputs (E1+, E2+) of each operational amplifier (411, 415) of the differential amplifier (410), so as to maintain a fixed voltage (Vc1, Vc2) at the terminals of the parasitic capacitive elements (120, 130), in such a way that the parasitic capacitive elements do not emit parasitic charges (C1, C2).

9. Method according to Claim 8, **characterized in that** it comprises, after step c), the steps of:

   d) subtracting (505) a first output signal (St1) obtained at the output of the first amplifier (411) of the differential amplifier (410) from a second output signal (St2) obtained at the output of the second amplifier (415) of the differential amplifier (410), in order to obtain a signal (St) to be amplified that is equivalent to the signal (Sc) to be measured without a parasitic signal, and
   e) amplifying (506) the signal (St) to be amplified.

10. Method according to Claim 8 or 9, **characterized in that** it comprises, before step b), the steps of:

   f) filtering (501) the first and second noisy signals (Scp1, Scp2) for frequencies above a frequency threshold (Sf1),
   g) filtering (502) an engine signal (Sb) for frequencies above the frequency threshold (Sf1).

# Fig 1

# Fig 2

# Fig 3

# Fig 4

# Fig 5

# Fig 6

**EP 2 904 364 B1**

**RÉFÉRENCES CITÉES DANS LA DESCRIPTION**

**Documents brevets cités dans la description**

- US 2009120164 A